# EUROPÄISCHE PATENTSCHRIFT

(11) **EP 0 594 143 B1**
(45) Veröffentlichungstag und Bekanntmachung des Hinweises auf die Patenterteilung: **09.04.1997**
(21) Anmeldenummer: 93116915.5
(22) Anmeldetag: 20.10.1993
(51) Int. Cl.: F16B 37/04

(54) **Verbindungselement**
Connecting device
Elément de connexion

(30) Priorität: 21.10.1992 DE 9214210 U
(43) Veröffentlichungstag der Anmeldung: 27.04.1994
(73) Patentinhaber: DIAG DESIGN AG, CH-6301 Zug (CH)
(72) Erfinder: Kern, Fritz, CH-8434 Kaiserstuhl (CH)
(74) Vertreter: Schmitt, Hans, Dipl.-Ing.

(56) Entgegenhaltungen:
- EP-A- 0 387 967
- DE-A- 1 500 871
- DE-A- 1 575 071
- FR-A- 864 680
- FR-A- 1 526 797
- US-A- 1 768 505
- US-A- 4 925 351

## Beschreibung

Die Erfindung betrifft eine Verbindungsanordnung, bestehend aus einem Verbindungselement und einem Befestigungsteil, wobei das Verbindungselement einen Grundkörper hat, der mit zumindest zwei überstehenden Federstegen verbunden ist, welche an ihren elastisch zueinander bewegbaren Endbereichen Rasthaken zum Hintergreifen der Befestigungsöffnung eines ersten Befestigungsteils in einer ausgefederten Verriegelungsstellung aufweisen und in den ein Anschlußteil einsetzbar ist, das zum Sichern und/oder Aufspreizen der Federstege in der ausgefederten Verriegelungsstellung in deren Bereich einschraubbar, eindrückbar oder einschiebbar ist und wobei zwischen dem Anschlußteil und dem Verbindungselement ein zweites Befestigungsteil haltbar ist.
Bei manchen vorbekannten Rohrschellen werden beispielsweise die beiden im wesentlichen halbkreisförmigen Schellenbügel an zumindest einer Seite mittels einer Schließschraube geschlossen und verspannt. Dabei wird die eine Durchstecköffnung des einen Schellenbügels durchsetzende Schließschraube in ein am benachbarten Schellenbügel vorgesehenes Innengewinde eingedreht.
In den derart verschließbaren Rohrschellen können Rohre oder dergleichen an einer Decke, Wand oder an sonstigen Tragkonstruktionen befestigt werden. Dabei ist jedoch das Einlegen, Ausrichten und Festspannen der Rohre in einer mit ihrem einen Schellenbügel bereits an der Decke oder dergleichen befestigten Rohrschelle aufwendig und mühsam, wenn nämlich einerseits das Rohr in der Rohrschelle gehalten werden muß und andererseits deren Schließschraube in das ihr zugeordnete Innengewinde einzuführen ist.

Man hat daher auch bereits verschiedene Rohrschellen geschaffen, die ein provisorisches Schließen der Schellenbügel und damit eine werkzeuglose Vormontage erlauben.
Bei diesen vorbekannten Rohrschellen wird meist der Schraubenkopf der an dem einen Schellenbügel oder Schellenende schwenkbar gehaltenen Schließschraube mit Hilfe des benachbarten Schellenbügels oder dergleichen gefangen.

So kennt man beispielsweise aus der EP 0 387 967 A1 eine Rohrschelle mit einem einstückigen Schellenbügel, der an seinen beiden freien gegenüberliegenden Enden jeweils einen Befestigungsflansch für eine Schließschraube aufweist. Diese Schließschraube ist im Bereich des einen Befestigungsflansches schwenkbar gehalten, während der gegenüberliegende Befestigungsflansch eine in Schwenkrichtung der Schließschraube randseitig offene Einführöffnung hat. Wird nun der eine Befestigungsflansch in Richtung zum anderen Befestigungsflansch gedrückt, beaufschlagt die Schließschraube den die Durchstecköffnung aufweisenden Befestigungsflansch, um in einer bestimmten Schwenkposition anschließend in diese randseitig offene Durchstecköffnung zu rutschen. Auf diese Weise kann die vorbekannte Rohrschelle beispielsweise nach dem Einlegen eines Rohres zunächst provisorisch verschlossen werden, um sie später durch Eindrehen und Festziehen der Schraube endgültig zu schließen.

Nachteilig bei dieser vorbekannten Rohrschelle ist jedoch, daß die Schließschraube nur ein bestimmtes Maß über den sie tragenden Befestigungsflansch überstehen darf, weil sich andernfalls ihr Schraubenkopf nicht in der Einführöffnung des gegenüberliegenden Befestigungsflansches verfangen kann. Auch bedeutet die randseitige offene Ausbildung des Befestigungsflansches eine gewisse bereichsweise Schwächung dieser vorbekannten Rohrschelle, deren Funktionsweise im übrigen nicht ohne weiteres auf andere, eventuell ebenfalls zunächst nur provisorisch vorzunehmende Schraubverbindungen übertragbar ist.

Aus der FR-A-864 680 kennt man bereits eine Verbindungsanordnung der eingangs erwähnten Art, die im wesentlichen aus einem einstückigen Materialzuschnitt besteht, von dessen über Kreuz angeordneten Materialstegen zwei gegenüberliegende Stegenden in die Befestigungsöffnung eines ersten Befestigungsteils eingreifen, um mit ihren nach außen aufgebogenen und als Rasthaken dienenden Endbereichen den die Befestigungsöffnung begrenzenden Randbereich zu hintergreifen. Die beiden anderen Stegenden kommen zwischen den miteinander verbundenen Befestigungsteilen zu liegen und begrenzen die Einstecktiefe dieses vorbekannten Verbindungselements. Dabei ist die Befestigungsöffnung des ersten Befestigungsteiles so groß dimensioniert, daß darin das Verbindungselement im wesentlichen aufgenommen wird und die Befestigungsteile flächig miteinander verbunden werden können. Um jedoch mit Hilfe der vorbekannten Verbindungsanordnung eine belastbare Verbindung herstellen zu können, ist es erforderlich, die in die Befestigungsöffnung eingreifenden Rasthaken mit einer Schraube in ihrer Montagestellung aufzuweiten oder zu sichern, die als Anschlußteil zum Verbinden des ersten sowie des zweiten Befestigungsteil dient. Eine dauerhafte Vormontageposition ist mit Hilfe des vorbekannten Verbindungselements also nicht möglich.

Es besteht daher insbesondere die Aufgabe, eine vielseitig einsetzbare Verbindungsanordnung der eingangs erwähnten Art zu schaffen, die eine einfache und vor allem auch belastbare Vormontage erlaubt.

Die erfindungsgemäße Lösung dieser Aufgabe besteht bei der Verbindungsanordnung der eingangs erwähnten Art insbesondere darin, daß die an dem ersten Befestigungsteil oder dergleichen vorgesehene Befestigungsöffnung durch einen Einstecktrichter begrenzt ist, der sich in Einsteckrichtung des Verbindungselementes zur Befestigungsöffnung hin konisch verjüngt, daß der Einstecktrichter in Gebrauchsstellung des Verbindungselementes im wesentlichen dessen zwischen dem Grundkörper und den Rasthaken angeordneten Teilbereich aufnimmt und daß in der ausgefederten Verriegelungsstellung zwischen der Längsachse des Anschlußteiles und der der Befestigungsöffnung zugewandten Raststirnseite der Rasthaken ein Winkel kleiner 90° eingeschlossen ist.

Zwar ist aus der DE-OS 15 00 871 bereits ein im wesentlichen hülsen- oder zylinderförmiger Dübel bekannt, der einen ringförmigen Grundkörper aufweist, über den drei durch keilförmige Ausschnitte voneinander getrennte Federstege überstehen. Diese drei Federstege sind mit jeweils einem im rechten Winkel nach außen weisenden Rasthaken ausgebildet. Beim Eindrücken des vorbekannten Dübels in ein Bohrloch oder dergleichen Befestigungsöffnung einer Platte oder eines Hohlkörpers werden die Federstege zusammengepreßt, um anschließend auf der Rückseite der Platte oder des Hohlkörpers in ihre Verriegelungsstellung auszufedern. Durch Eindrehen einer Schraube in den Grundkörper können die Federstege in dieser Verriegelungsstellung gesichert werden, so daß ein Herausziehen des Dübels aus der Befestigungsöffnung nun nicht mehr möglich ist. Die Anwendbarkeit dieses vorbekannten Dübels ist jedoch auf eine Platten-, Hohlkörper- oder Abstandsmontage begrenzt. Dagegen können die beiden Schellenbügel einer Rohrschelle nach dem Einlegen eines eventuell auch schweren Rohres mit diesem vorbekannten Verbindungselement auch nicht provisorisch verschlossen werden.

Demgegenüber läßt sich das Verbindungselement der erfindungsgemäßen Verbindungsanordnung mit den freien Enden seiner Federstege mit wenig Aufwand und auch ohne Werkzeug in die Befestigungsöffnung eines Befestigungsteiles oder dergleichen eindrücken. Beim Einführen der Federstege in die Befestigungsöffnung können diese so elastisch zueinander einfedern, daß die Federstege in die Befestigungsöffnung passen. Ist das Verbindungselement tief genug in die Befestigungsöffnung eingeschoben, federn die Stege in eine Verriegelungsstellung aus, in der die am freien Endbereich der Federstege vorgesehenen Rasthaken den die Befestigungsöffnung begrenzenden Randbereich des Befestigungsteiles hintergreifen. In dieser Verriegelungsstellung ist das Verbindungselement bereits fest an dem die Befestigungsöffnung aufweisenden Befestigungsteil gehalten. Da die der Befestigungsöffnung zugewandte Raststirnseite in der ausgefederten Verriegelungsstellung der Rasthaken entgegen der Einschraub- oder Einsteckrichtung des Anschlußteiles nach außen abgewinkelt ist, kann das an den die Befestigungsöffnung begrenzenden Randbereich angreifende Verbindungselement der erfindungsgemäßen Verbindungsanordnung bereits vergleichsweise hoch belastet werden, ohne daß die Federstege in ihrer ausgefederten Verriegelungsstellung mit Hilfe des Anschlußteiles gesichert werden müßten. Es hat sich gezeigt, daß das Verbindungselement der erfindungsgemäßen Verbindungsanordnung mit seinen speziellen Rasthaken im Vergleich zu einem Verbindungselement, dessen Widerhaken lediglich im rechten Winkel nach außen weisen, wesentlich stärker belastet werden kann. Die erfindungsgemäße Verbindungsanordnung eignet sich somit auch zur Vormontage einer Rohrschelle, deren beiden Schellenbügel nach dem Einlegen eines eventuell auch schweren Rohres mittels des Verbindungselementes fest miteinander zu verbinden sind, ohne gleich miteinander verschraubt werden zu müssen. Wird anschließend das zunächst nur geringfügig in die Eingriffsöffnung des Grundkörpers eingreifende Anschlußteil in den Bereich der Federstege eingedrückt oder eingeschraubt, so lassen sich diese in ihrer ausgefederten Verriegelungsstellung festlegen und gegen eine Rückbewegung in Richtung zur Einschraub- oder Einsteck-Längsachse des Anschlußteiles sichern.

Die an dem ersten Befestigungsteil oder dergleichen vorgesehene Befestigungsöffnung ist durch einen Einstecktrichter begrenzt, der sich in Einsteckrichtung des Verschlußelementes zur Befestigungsöffnung hin konisch verjüngt und dadurch das leichte Einführen der Federstege noch zusätzlich begünstigt. Dabei steift dieser Einstecktrichter das erste Befestigungsteil im Bereich seiner Befestigungsöffnung noch zusätzlich aus, was der hohen Belastbarkeit der mit der erfindungsgemäßen Verbindungsanordnung bewirkten Verbindung entgegenkommt. Da das Verbindungselement dieser Verbindungsanordnung mit seinem zwischen dem Grundkörper und den Rasthaken angeordneten Teilbereich im Einstecktrichter des ersten Befestigungsteils aufgenommen ist, können das erste und das zweite Befestigungsteil eng aneinander anliegen.

Dabei wird eine Ausführungsform bevorzugt, bei der das vorzugsweise nur zum Sichern der Federstege dienende Anschlußteil bei der vorgesehenen Maximalbelastung nicht an den Federstegen anliegt. Eine solche Ausführungsform schont das Gewinde des Anschlußteiles, welches daher jederzeit auch wieder aus dem Verbindungselement herausgeschraubt werden kann. Erst bei einem Überschreiten der vorgesehenen Maximalbelastung werden die Federstege gegen das Anschlußteil gedrückt und von diesem gegen ein unbeabsichtigtes Herausziehen aus der Befestigungsöffnung einer Rohrschelle oder dergleichen Befestigungsteiles gesichert.

Die erfindungsgemäße Verbindungsanordnung erlaubt eine einfache und insbesondere auch belastbare Vormontage. Sie ist bei Rohrschellen, aber auch in vielen anderen Anwendungsfällen vorteilhaft einsetzbar, in denen beispielsweise eine Schraubverbindung wegen der ungünstigen Montagebedingungen zunächst provisorisch und möglichst ohne Werkzeug vormontiert werden soll.

Besonders zweckmäßig ist es, wenn die der Befestigungsöffnung zugewandte Raststirnseite und die in axialer Richtung orientierte Schmalseite der Rasthaken einen spitzen Winkel zwischen sich einschließen. Bei einer Belastung des Verbindungselementes der erfindungsgemäßen Verbindungsanordnung können sich die Rasthaken besonders gut und fest in den die Befestigungsöffnung begrenzenden Randbereich verhaken. Dabei werden die Federstege durch die abgewinkelte Raststirnseite ihrer Rasthaken mit zunehmender Belastung noch weiter auseinander gespreizt, was die Belastbarkeit dieser Verbindung noch zusätzlich erhöht.

Vorteilhaft ist es, wenn der Grundkörper eine Einsteck-, Einschraub- oder dergleichen Eingriffsöffnung aufweist, in die ein als Schraub- oder Einsteckteil ausgebildetes Anschlußteil einsetzbar ist. Dabei kann das Anschlußteil je nach Anwendungsfall unterschiedlich ausgebildet sein. Beispielsweise sieht eine Ausführungsform gemäß der Erfindung vor, daß in die Eingriffsöffnung ein vorzugsweise als Steckstift ausgebildetes Einsteckteil einsetzbar ist, welches in der Eingriffsöffnung kraftschlüssig und/oder reibschlüssig gehalten ist. Die kraft- oder reibschlüssige Verankerung des Anschlußteiles in der Eingriffsöffnung des Verbindungselementes kann beispielsweise durch einen im Vergleich zum lichten Durchmesser der Eingriffsöffnung geringfügig größeren Außendurchmesser des Anschlußteiles bewerkstelligt werden, so daß durch ein Einschlagen oder Einpressen dieses nagelartigen Steckstiftes eine feste Verbindung zwischen ihm und dem Grundkörper entsteht.

Eine Weiterbildung gemäß der Erfindung sieht vor, daß das Anschlußteil eine Quer- oder Außenprofilierung aufweist, die vorzugsweise mit einer am Grundkörper im Bereich der Eingriffsöffnung vorgesehenen Querprofilierung zusammenwirkt. Bei einer solchen Ausführungsform können an das Anschlußteil auch große Lasten dauerhaft angehängt werden, ohne daß dies die feste Verbindung zwischen dem und dem Grundkörper beeinträchtigen würde.

Dabei sieht eine bevorzugte und besonders hoch belastbare Ausführungsform gemäß der Erfindung vor, daß das Anschlußteil als ein Schraubteil mit Außengewinde ausgebildet ist, welches in ein Innengewinde der Eingriffsöffnung einschraubbar ist. Der Grundkörper des Verbindungselementes ist hier praktisch mutterartig ausgebildet, wobei die Eingriffsöffnung ein Innengewinde als Querprofilierung trägt. In dieses Innengewinde ist das als Schraubteil ausgebildete Anschlußteil einschraubbar, welches als Quer- oder Außenprofilierung ein vorzugsweise korrespondierendes Außengewinde aufweist.

Die hohe Belastbarkeit der erfindungsgemäßen Verbindungsanordnung wird begünstigt, wenn ihr Verbindungselement mehrere, vorzugsweise vier, sich paarweise gegenüberliegende Federstege hat. Dabei lassen sich gerade vier Federstege besonders eng zueinander einfedern und an die verschiedensten lichten Durchmesser der Befestigungsöffnungen anpassen.

Um einen günstigen Angriffswinkel der Rasthaken zu erreichen und um die Federstege leicht zueinander einfedern zu können, ist es vorteilhaft, wenn die Federstege in ihrem zwischen dem Grundkörper und dem Rasthaken angeordneten Bereich jeweils schräg nach innen zur Einschraub- oder Einsteck-Längsachse des Anschlußteiles geneigt sind.

Eine besonders einfache Ausführung gemäß der Erfindung sieht vor, daß die freien Endbereiche der Federstege als Rasthaken ausgebildet und dazu nach außen abgewinkelt sind. Bei dieser mit wenig Aufwand herstellbaren Ausführungsform können die Federstege zunächst schräg nach innen zur Einschraub- oder Einsteck-Längsachse geneigt sein, um wiederum zu ihrem freien Ende hin in einen in die entgegengesetzte Richtung abgewinkelten Rasthaken überzugehen.

Um die Federstege in ihrer ausgefederten Verriegelungsstellung mittels dem Anschlußteil leicht festlegen zu können, ohne daß sich das Verbindungselement in der Befestigungsöffnung mitdreht, ist es zweckmäßig, wenn im Bereich der Befestigungsöffnung eine, vorzugsweise mit den freien Endbereichen und/oder den Rasthaken der Federstege zusammenwirkende Drehsicherung für das Verbindungselement vorgesehen ist.

Dabei ist eine solche Drehsicherung in verschiedenen Ausführungen denkbar. So sieht beispielsweise eine Ausführungsform gemäß der Erfindung vor, daß die Befestigungsöffnung zur Drehsicherung des Verbindungselementes einen mehreckigen, gezackten oder dergleichen unrunden lichten Querschnitt hat. Eine solche Befestigungsöffnung mit einem unrunden lichten Querschnitt kann gut mit den freien Endbereichen der Federstege zusammenwirken, die sich in den Eckbereichen der Befestigungsöffnung verhaken und somit einem Verdrehen des Verbindungselementes entgegenwirken. Eine Weiterbildung gemäß der Erfindung sieht jedoch vor, daß die Befestigungsöffnung auf ihrer dem Grundkörper abgewandten Flachseite durch einen Ringbund begrenzt ist, der an seiner axial vorstehenden Stirnseite zumindest eine Rastausnehmung oder - anformung hat und daß diese Rastausnehmung oder -anformung in Verriegelungsstellung des Verbindungselementes mit den Rasthaken zusammenwirkt. Der Ringbund einer solchen Drehsicherung kann auf einfache Weise etwa durch ein axiales Aufweiten der Befestigungsöffnung hergestellt werden. Durch nachträgliche Einprägungen oder Einformungen des Ringbundes sind anschließend die entsprechenden Rastausnehmungen zu erzeugen, die mit den Rasthaken des Verbindungselementes zusammenwirken.

Eine vorteilhafte Weiterbildung gemäß der Erfindung, die sich durch eine hohe Belastbarkeit der mit ihr bewirkten Verbindung auszeichnet, sieht vor, daß die freien Endbereiche der Federstege vorzugsweise an ihren beiden Schmalseiten eine etwa radial nach außen überstehende Anformung aufweisen, die zumindest in ihrem zum freien Ende der Federstege weisenden oberen Teilbereich als Rasthaken ausgebildet sind.

Dabei ist es zweckmäßig, wenn zumindest eine radial nach außen überstehende Anformung einen unteren, gegenüber dem oberen, als Rasthaken ausgebildeten Teilbereich zurückversetzten Teilbereich hat. Dieser zurückversetzte untere und ebenfalls radial nach außen überstehende Teilbereich wirkt einem Verdrehen des Verbindungselementes in der Befestigungsöffung der erfindungsgemäßen Verbindungsanordnung entgegen und kann sich insbesondere bei einem unrunden lichten Querschnitt dieser Befestigungsöffnung an den sie begrenzenden Randbereich fest anlegen.

Um die Federstege des Verbindungselementes gut in eine Befestigungsöffnung einführen und dabei mit wenig Aufwand elastisch zueinander einfedern zu können, ist es zweckmäßig, wenn die Anformungen der Federstege an ihrem dem Grundkörper abgewandten Randbereich eine Einsteckschräge aufweisen und wenn sich dazu die Anformungen zum freien Ende der Federstege hin verjüngen.

Um zwei Schellenbügel oder dergleichen Befestigungsteile so miteinander verbinden zu können, daß diese eng aneinander anliegen, ist es zweckmäßig, wenn die der Befestigungsöffnung abgewandte Flachseite des Grundkörpers vorzugsweise etwa in einer Ebene mit dem an den Einstecktrichter angrenzenden Bereich des den Einstecktrichter aufweisenden Befestigungsteiles angeordnet ist.

Das Anschlußteil, das als Schraube, Einschraubhaken oder dergleichen Verbindungselement mit Gewindeschaft ausgebildet oder auch als Steckstift oder dergleichen Einsteckteil ausgestaltet sein kann, läßt sich besonders leicht und fest in den Grundkörper des Verbindungselementes einschrauben oder eindrücken, wenn der vorzugsweise plättchenförmige Grundkörper insbesondere auf seiner den Federstegen zugewandten Flachseite einen Bund aufweist, der das Innengewinde oder dergleichen Querprofilierung des Grundkörpers trägt.

Dabei ist es zweckmäßig, wenn zur Sicherung des Anschlußteiles in der Eingriffsöffnung eine Drehsicherung vorgesehen ist und wenn dazu der Bund vorzugsweise in radialer Richtung geringfügig gestaucht ist. Möglich ist aber auch, als Drehsicherung beispielsweise zumindest eine vom Grundkörper in den Bereich der Federstege abgewinkelte Sicherungslasche vorzusehen, die mit ihrem freien Ende den Gewindeschaft des Schraubteiles oder dergleichen Außenprofilierung des Anschlußteiles beaufschlagt.

Die hohe Belastbarkeit der mit der erfindungsgemäßen Verbindungsanordnung bewirkten Verbindung läßt sich noch zusätzlich begünstigen, wenn die Federstege des Verbindungselementes in ihrer gesicherten ausgefederten Gebrauchsstellung mit ihren freien Endbereichen zumindest bereichsweise am Anschlußteil anliegen und wenn an dem am Anschlußteil anliegenden Teilbereich der Federstege ein innerer Gewindeabschnitt oder dergleichen mit der Außenprofilierung des Anschlußteiles zusammenwirkende Querprofilierung vorgesehen ist. Mit Hilfe einer solchen Querprofilierung an der zur Einschraub- oder Einsteck-Längsachse weisenden Flachseite der Federstege wird das Schraubteil nicht nur im Bereich des Grundkörpers des erfindungsgemäßen Verschlußelementes gegen ein Herausreißen gesichert.

Eine vorteilhafte und besonders einfach herzustellende Ausführungsform gemäß der Erfindung sieht vor, daß der Grundkörper, die Federstege und gegebenenfalls auch der Bund des Verbindungselementes einstückig miteinander verbunden sind und daß das Verbindungselement aus Federstahl, Kunststoff oder dergleichen elastischem Material besteht.

Weitere Merkmale der Erfindung ergeben sich aus der folgenden Beschreibung eines erfindungsgemäßen Ausführungsbeispieles in Verbindung mit den Ansprüchen und der Zeichnung. Die einzelnen Merkmale können je für sich oder zu mehreren bei einer Ausführungsform gemäß der Erfindung verwirklicht sein.

Es zeigen in unterschiedlichen Maßstäben und teilweise schematischen Darstellungen:
- Fig. 1: ein mit seinen Federstegen in eine Befestigungsöffnung eingreifendes Verbindungselement in einem Querschnitt, wobei das Verbindungselement in einer ausgefederten Verriegelungsstellung dargestellt ist,
- Fig. 2: das Verbindungselement aus Figur 1 in einer weiteren Querschnittsdarstellung, wobei die Federstege in einer aneinander angenäherten oder anliegenden Position dargestellt sind,
- Fig. 3: das Verbindungselement in einer Draufsicht auf die bereits in Figur 2 dargestellte Position,
- Fig. 4: eine Rohrschelle in einer perspektivischen Darstellung, wobei die beiden Schellenbügel dieser Rohrschelle ein Rohr umgreifen und mittels eines dungselementes zumindest an einem der Schellenenden miteinander verbunden sind,
- Fig. 5: die Rohrschelle aus Figur 4 mit ihren beiden gegenüberliegenden, noch nicht miteinander verbundenen Schellenenden und
- Fig. 6: eine Rohrschelle in einer Teil-Seitenansicht im Bereich eines ihrer beiden gegenüberliegenden Schellenenden, wobei in der Befestigungsöffnung des Schellenendes ein Verbindungselement mit einem eingeschraubten Anschlußteil vorgesehen ist.

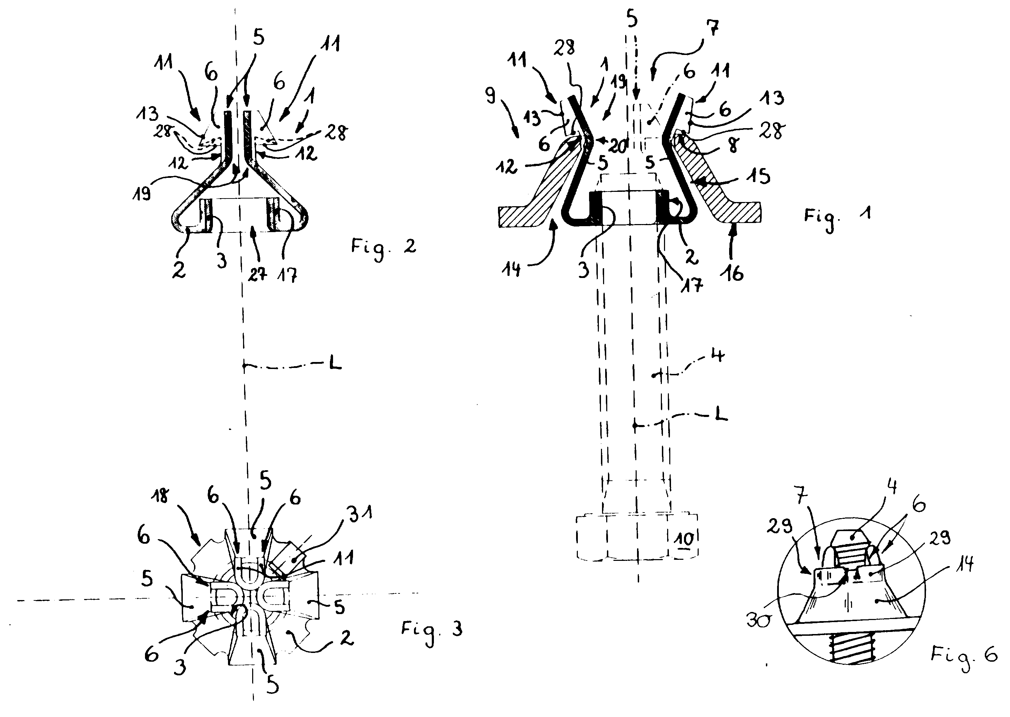

In den Figuren 1 bis 3 ist ein Verbindungselement 1 dargestellt, welches einen mutterartigen Grundkörper 2 mit einem Innengewinde 3 aufweist, wobei in das Innengewinde 3 der Eingriffsöffnung 27 ein in Figur 1 dargestelltes und hier als Schraube 4 ausgebildetes Anschlußteil einschraubbar ist.

Das in den Figuren 1 bis 3 dargestellte Verbindungselement 1 hat vier, sich paarweise gegenüberliegende Federstege 5, die etwa in Einschraubrichtung der Schraube 4 über den Grundkörper 2 überstehen und elastisch zueinander bewegbar sind. An den freien Endbereichen der Federstege 5 sind Rasthaken 6 vorgesehen, die in der in Figur 1 dargestellten ausgefederten gelungsstellung der Federstege 5 den eine Befestigungsöffnung 7 begrenzenden Randbereich 8 auf der dem Grundkörper 2 abgewandten Seite eines Schellenbügels oder dergleichen gungsteiles 9 (vgl. Figur 1) hintergreifen.

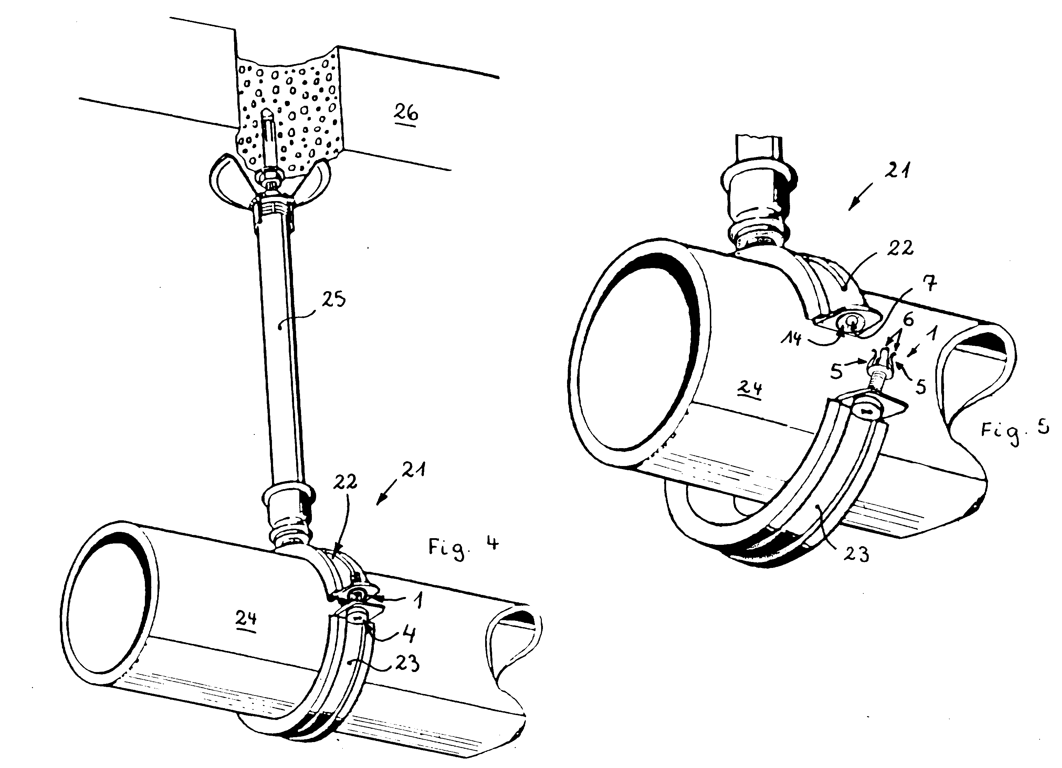

Wie in den Figuren 4 und 5 angedeutet ist, läßt sich ein zwischen dem Schraubenkopf 10 und dem Verbindungselement 1 auf der Schraube 4 gehaltenes - in Figur 1 nicht dargestelltes - erstes Befestigungselement mit einem zweiten, die Befestigungsöffnung 7 aufweisenden Befestigungsteil 9 (vgl. Figur 1) zunächst provisorisch und praktisch ohne Werkzeug vormontieren, um die beiden Befestigungsteile anschließend durch Festdrehen der Schraube 4 endgültig miteinander zu verbinden. Dabei wird für eine Vormontage das Verbindungselement 1 mit seinen Federstegen 5 in die Befestigungsöffnung 7 des zweiten Befestigungsteiles 9 soweit eingedrückt, bis dessen Rasthaken 6 in die in Figur 1 gezeigte Verriegelungsstellung ausfedern.

Die Federstege 5 sind in ihrem zwischen dem Grundkörper 2 und den Rasthaken 6 angeordneten Bereich jeweils schräg nach innen zur Einschraub-Längsachse L der Schraube 4 geneigt. Dadurch wird ein günstiger Angriffswinkel der Rasthaken 6 am Befestigungsteil 9 sowie ein leichtes Einfedern beim Eindrücken des Verbindungselementes 1 in die Befestigungsöffnung 7 erreicht und der sichere Halt des Verbindungselementes 1 in der Befestigungsöffnung 7 begünstigt.

Aus der in Figur 1 gezeigten Darstellung des Verbindungselementes 1 wird deutlich, daß die der Befestigungsöffnung 7 zugewandte Raststirnseite 28 in der ausgefederten Verriegelungsstellung der Rasthaken 6 entgegen der Einschraubrichtung der Schraube 4 nach außen abgewinkelt ist. Diese Schrägstellung der Rasthaken 6 an ihrer Raststirnseite 28 wird hier durch eine nach außen gerichtete und mit geringem Abstand in Einschraubrichtung vor den Rasthaken 6 angeordnete Abwinklung des freien Endbereiches der Federstege 5 erreicht; möglich wäre aber auch, diese Raststirnseite 28 der Rasthaken 6 nicht rechtwinklig, sondern entsprechend schräg zur Längsachse dieses freien Federsteg-Endes auszugestalten, wie dies in Figur 2 gestrichelt angedeutet ist.

Da in Figur 1 zwischen der Längsachse L des Anschlußteiles 4 und der Raststirnseite 28 der Rasthaken 6 ein Winkel kleiner 90° eingeschlossen ist, verhaken sich die Rasthaken mit zunehmender Belastung des Verbindungselementes 1 sowie der an ihr angreifenden Schraube 4 zunehmend stärker in dem die Befestigungsöffnung 7 begrenzenden Randbereich 8, ohne daß die Federstege 5 nach innen gedrückt werden. Das in der ausgefederten Verriegelungsstellung seiner Federstege 5 die Befestigungsöffnung 7 hintergreifende Verbindungselement 1 kann somit dann erheblich belastet werden, wenn - wie in Figur 1 gezeigt - die Schraube 4 noch nicht in den Bereich der Federstege 5 eingeschraubt ist und diese gegen ein unbeabsichtigtes Einschwenken nach innen sichert. Das Verbindungselement 1 eignet sich somit auch zur Vormontage von Rohrschellen, deren gegenüberliegenden Schellenbügel nach dem Einlegen eines Rohres mittels dem Verbindungselement 1 fest zusammengehalten werden, ohne daß gleichzeitig auch ein Einschrauben der Schraube 4 in das Verbindungselement 1 erforderlich wäre.

Wie die Figuren 1 und 2 zeigen, weisen die freien Endbereiche der Federstege 5 jeweils an ihren beiden Schmalseiten eine radial nach außen umgebogene Anformung 11 auf, die in ihrem zum freien Ende der Federstege 5 weisenden oberen Teilbereich die Rasthaken 6 bilden. Ein unterer, gegenüber dem benachbarten Rasthaken 6 zurückversetzter Teilbereich 12 jeder Anformung 11, der ebenfalls etwa radial nach außen über den entsprechenden Federsteg 5 übersteht, ist auch in der Verriegelungsstellung noch im Bereich der Befestigungsöffnung 7 angeordnet und soll einem Verdrehen des Verbindungselementes 1 beim Ein- oder Ausschrauben der Schraube 4 im Innengewinde 3 der Eingriffsöffnung 27 entgegenwirken. Dieser radial überstehende untere Teilbereich 12 der Anformungen 11 kann sich an den die Befestigungsöffnung 7 begrenzenden Randbereich besonders dann gut verhaken und anlegen, wenn die Befestigungsöffnung 7 einen mehreckigen, gezackten oder dergleichen unrunden lichten Querschnitt hat.

Bei einer anderen vorteilhaften Ausführungsform einer solchen Drehsicherung, die ebenfalls mit den freien Endbereichen der Federstege 5 zusammenwirkt, ist vorgesehen, daß die Befestigungsöffnung 7 zunächst mit radialen Vorsprüngen hergestellt wird und daß beispielsweise in einem anschließenden Herstellungsvorgang diese Vorsprünge derart nach außen umgebogen werden, daß sie über den die Befestigungsöffnung 7 begrenzenden Randbereich 8 überstehen und dort leicht mit den in Einschraub-Längsrichtung L orientierten Flachseiten der Rasthaken 6 beim Drehen des Verbindungselementes 1 anschlagen.

In Figur 6 ist eine weitere vorteilhafte Ausführungsform gemäß der Erfindung dargestellt, bei der die Befestigungsöffnung 7 auf ihrer dem Grundkörper 2 abgewandten Flachseite durch einen Ringbund 29 begrenzt ist, der beispielsweise durch eine axiale Aufweitung der Befestigungsöffnung 7 hergestellt werden kann. Der Ringbund 29 hat an seiner axial vorstehenden Stirnseite zumindest eine Rastausnehmung 30, vorzugsweise vier über Kreuz angeordnete Rastausnehmungen 30, die durch randseitige Einformungen oder eingedrückte Sicken des Ringbundes 29 gebildet sind. Diese Rastausnehmungen 30 wirken in Verriegelungsstellung des Verbindungselementes 1 mit dessen Rasthaken 6 zusammen, wobei die Federstege in Figur 6 auf beiden Seiten ihrer freien Endbereiche jeweils einen nach außen abgewinkelten Rasthaken 6 aufweisen.
Die in Figur 6 dargestellte Drehsicherung ist mit einem geringen Herstellungsaufwand verbunden und wirkt einem Verdrehen des Verbindungselementes 1 beim Einschrauben oder Herausschrauben der Schraube 4 wirkungsvoll entgegen.

Wie aus Figur 2 besonders gut ersichtlich ist, weisen die Anformungen 11 an ihrem dem Grundkörper 2 abgewandten Randbereich jeweils eine Einsteckschräge 13 auf, die durch eine entsprechende Verjüngung der Anformungen 11 in Richtung zum freien Ende der Federstege 5 gebildet ist. Diese Einsteckschrägen 13 der Anformungen 11 erleichtern das Eindrücken der Federstege 5 des Verbindungselementes 1 in die Befestigungsöffnung 7 eines Befestigungsteiles 9, wobei sich die Federstege 5 auch gut an diese Befestigungsöffnung 7 anpassen und während des Einschiebens des Verbindungselementes 1 zueinander einfedern lassen.

Um das leichte Einfedern und Eindrücken der Federstege 5 in die Befestigungsöffnung 7 zu begünstigen und um diese Befestigungsöffnung 7 auch unter schwierigen Montagebedingungen leicht finden zu können, ist es zweckmäßig, wenn die an einem Befestigungsteil oder dergleichen vorgesehene Befestigungsöffnung 7 durch einen - in Figur 1 und 6 dargestellten - Einstecktrichter 14 begrenzt ist, der sich in Einsteckrichtung des Verbindungselementes 1 zur Befestigungsöffnung 7 hin konisch verjüngt. Dieser Einstecktrichter 14 steift das Befestigungsteil 9 im Bereich seiner Befestigungsöffnung 7 noch zusätzlich aus, was einer hohen Belastbarkeit der mit dem erfindungsgemäßen Verbindungselement 1 hergestellten Verbindung noch zusätzlich entgegenkommt.

Da auch dieser Einstecktrichter 14 selbst bereits einen Ringbund 29 bildet, können die zur Drehsicherung des Verbindungselementes vorgesehenen Rastausnehmungen 30 auch unmittelbar an seiner axialen Stirnseite vorgesehen sein, ohne daß der Einstecktrichter 14 in diesem Bereich - wie in Figur 6 dargestellt - zylindrisch ausgebildet werden müßte.

Aus Figur 1 wird deutlich, daß der Einstecktrichter 14 in der verriegelten Gebrauchsstellung des Verbindungselementes im wesentlichen dessen zwischen dem Grundkörper 2 und den Rasthaken 6 angeordneten Teilbereich 15 aufnimmt. Da die der Befestigungsöffnung 7 abgewandte Flachseite des Grundkörpers 2 etwa in einer Ebene mit dem an den Einstecktrichter angrenzenden Bereich 16 angeordet ist, kann beispielsweise ein zwischen dem Schraubenkopf 10 und dem Verbindungselement 1 auf der Schraube 4 gehaltenes - in Figur 1 nicht dargestelltes - Befestigungsteil praktisch flach und bündig an der durch den Bereich 16 gebildeten Flachseite des Befestigungsteiles 9 anliegen.

Den Querschnittsdarstellungen des Verbindungselementes 1 in Figur 1 und 2 ist zu entnehmen, daß der im wesentlichen plättchenförmige Grundkörper 2 auf seiner den Federstegen 5 zugewandten Flachseite einen hier als Gewindebund 17 ausgebildeten Bund aufweist, der das Innengewinde 3 des Grundkörpers 2 trägt. Ein solcher, das Innengewinde 3 in axialer Richtung verlängernder Gewindebund 17 kommt einer hohen Belastbarkeit dieser Schraubverbindung entgegen. Dabei kann die Schraube 4 durch eine geringfügige und in radialer Richtung orientierte Stauchung des Gewindebundes 17 gegen ein unbeabsichtigtes Lösen im Innengewinde 3 gesichert werden. Möglich ist aber auch, die Schraube 4 im Innengewinde 3 durch eine, im Bereich 18 am Grundkörper 2 abgewinkelte, umgebogene oder dergleichen angreifende Drehsicherungslasche 31 zu sichern, die mit ihrem freien Ende den Gewindeschaft der Schraube 4 oder dergleichen Außenprofilierung des Anschlußteiles vorzugsweise auf der den Federstegen 5 zugewandten Seite des Grundkörpers 2 beaufschlagt. Eine solche Ausführungsform hat den Vorteil, daß das Innengewinde unabhängig von der Sicherungslasche in den Gewindebund 17 eingearbeitet werden kann.

Die hohe Belastbarkeit der hier gezeigten Schraubverbindung läßt sich noch zusätzlich begünstigen, wenn die Federstege 5 in ihrer ausgefederten Verriegelungsstellung und bei einem in den Bereich der Federstege 5 eingeschraubten Schraubteil 4 mit ihren freien Endbereichen zumindest bereichsweise am Schraubteil anliegen und wenn an dem am Schraubteil anliegenden Teilbereich 19 der Federstege 5 ein innerer - in Figur 1 nur angedeuteter - Gewindeabschnitt 20 oder dergleichen mit dem Außengewinde des Schraubteiles 4 zusammenwirkende Querprofilierung vorgesehen ist. Bei einer solchen Ausführungsform greift die Schraube 4 mit ihrem Schraubenschaft nämlich unmittelbar im Bereich der Rasthaken 6 an, wodurch sich auch höhere, auf das Schraubteil 4 einwirkende Zugkräfte über die Rasthaken 6 gut auf das Befestigungsteil übertragen lassen.

Bevorzugt wird jedoch eine Ausführungsform, bei der das vorzugsweise nur zum Sichern der Federstege 5 dienende Anschlußteil 4 nicht an den Federstegen anliegt, sondern bei der die Federstege 5 erst bei einem Überschreiten der für das Verbindungselement 1 vorgesehenen Maximalbelastung gegen das Anschlußteil 4 gedrückt und von diesem gegen ein unbeabsichtigtes Herausziehen aus der Befestigungsöffnung 7 gesichert werden.

Wie Figur 1 zeigt, ist zwischen dem Innengewinde 3 des Grundkörpers 2 und den Rasthaken 6 ein Abstand in Einschraubrichtung vorgesehen. Die Schraube 4 kann somit zunächst nur geringfügig in das Innengewinde 3 eingeschraubt werden, um ein Einfedern der Federstege 5 zueinander beim Eindrücken des Verbindungselementes 1 in eine Befestigungsöffnung 7 nicht zu behindern. Wie in Figur 1 strichpunktiert angedeutet ist, passen sich die elastischen Federstege 5 gut an den lichten Durchmesser der Befestigungsöffnung 7 an, wobei die Federstege 5 bis zu der in Figur 2 und 3 dargestellten Einsteckposition elastisch einfedern können. Ist das Verbindungselement genügend in die Befestigungsöffnung 7 eingedrückt, hintergreifen die Federstege 5 mit ihren endseitig vorgesehenen Rasthaken 6 den die Befestigungsöffnung 7 begrenzenden Randbereich 8 in der in Figur 1 mit durchgezogenen Linien dargestellten ausgefederten Verriegelungsstellung.

In dieser ausgefederten Verriegelungsstellung kann das Schraubteil in den Bereich der Federstege eingeschraubt werden, so daß ein nochmaliges Einfedern der Federstege 5 in Richtung zur Einschraub-Längsachse L durch den Schraubenschaft der Schraube 4 begrenzt ist. Somit ist durch Einschrauben des Schraubteils 4 in den Bereich der Federstege 5 ein Sichern und Aufspreizen der Federstege in dieser ausgefederten Verriegelungsstellung möglich.

In den Figuren 4 und 5 wird ein praktischer Anwendungsfall für ein ähnlich ausgebildetes Verbindungselement 1 dargestellt. Dabei umgreift eine Rohrschelle 21 mit ihren beiden, etwa halbkreisförmigen Schellenbügeln 22, 23 ein Rohr 24. Die Rohrschelle 21 ist ihrerseits mit einem ersten Schellenbügel 22 über ein Stützelement 25 an einer Decke oder dergleichen Tragkonstruktion 26 gehalten. Die Schellenbügel 22, 23 der Rohrschelle 21 sind zunächst nur an jeweils einem ihrer beiden Schellenenden miteinander verbunden, so daß das Rohr 24 in die Rohrschelle eingelegt werden kann. An dem gegenüberliegenden Schellenende weist der erste Schellenbügel 22 den in die Befestigungsöffnung 7 mündenden Einstecktrichter 14 auf. Dabei ist die Schraube 4 in einer - hier nicht sichtbaren - Durchstecköffnung des zweiten Schellenbügels 23 derart gehalten, daß dieser zweite Schellenbügel 23 zwischen dem Schraubenkopf 10 und dem Verbindungselement 1 angeordnet ist.

Nach dem Einlegen des Rohres 24 in die Rohrschelle 21 kann diese durch bloßes Eindrücken des Verbindungselementes 1 in die Befestigungsöffnung 7 provisorisch geschlossen werden und das Rohr in seiner Längsrichtung noch ausgerichtet werden. Dabei ist diese Vormontage auch unter schwierigen Montagebedingungen, in denen das Rohr 24 in die Rohrschelle 21 einzulegen ist und gleichzeitig auch dessen Schellenbügel 22, 23 miteinander verbunden werden müssen, praktisch ohne Werkzeug möglich, weil das Verbindungselement in der in die Befestigungsöffnung 7 eingedrückten, ausgefederten Verriegelungsstellung seiner Federstege 5 mit den hier nach außen abgewinkelten und als Rasthaken 6 ausgebildeten Stegenden den die Befestigungsöffnung 7 begrenzenden Randbereich des ersten Schellenbügels 22 hintergreift. In dieser ausgefederten Verriegelungsstellung können die Federstege des Verbindungselementes 1 durch Einschrauben der Schraube 4 gesichert und festgelegt werden. Dabei läßt sich der Schraubenschaft auch über den Bereich der Federstege 5 hinaus in das Verbindungselement 1 eindrehen, um das Rohr 24 fest in der Rohrschelle 21 verspannen zu können.

In den Figuren 1 bis 5 dient das Verbindungselement 1 der Schraube 4 praktisch als Gewindeträger, welcher auch unter schwierigen Montagebedingungen eine einfache Vormontage erlaubt.

Hier nicht dargestellt ist eine Ausführungsform, bei der in die Eingriffsöffnung 27 am Grundkörper 2 des Verbindungselementes 1 ein nagelförmiger Steckstift eindrückbar ist. Dieses als Steckstift ausgebildete Anschlußteil ist in der Eingriffsöffnung 27 kraft- und reibschlüssig gehalten, wobei der beispielsweise mit einem verbreiterten Kopf versehene Steckstift einen im Vergleich zum lichten Durchmesser der Eingriffsöffnung 27 geringfügig größeren Außendurchmesser hat. Auch diese Ausführungsform ist ansonsten ähnlich wir in den Figuren 1 bis 5 ausgewählt.

Dabei kann auch der Steckstift oder dergleichen Anschlußteil eine quer zur Längsrichtung dieses Einsteckteiles orientierte Sägezahnprofilierung oder dergleichen Außenprofilierung aufweisen, die mit einer am Bund 17 und/oder im Bereich 20 der Federstege 5 vorgesehenen Querprofilierung zusammenwirkt. Der Bund 17 dient beim Einschlagen oder Eindrücken des Steckstiftes in die Eingriffsöffnung 27 diesem gleichzeitig auch als Führung. Wird der zunächst nur geringfügig in die Eingriffsöffnung 27 des Grundkörpers 2 eingreifende Steckstift noch weiter in das Verbindungselement 1 bis in den Bereich der Federstege 5 eingetrieben, werden diese durch den Steckstift oder dergleichen Anschlußteil in ihrer ausgefederten Stellung gesichert, so daß ein unmittelbar am Verbindungselement 1 angreifendes Befestigungsteil mit einem zwischen dem Kopf des Steckstiftes oder dergleichen und dem Verbindungselement 1 angeordneten Befestigungsteil fest und sicher verbunden werden kann.

Die hier vorgestellten und mit wenig Aufwand vorzugsweise einstückig aus Federstahl, Kunststoff oder dergleichen elastischem Material hergestellten Verbindungselemente 1 zeichnen sich durch eine hohe Belastbarkeit der mit ihnen bewirkten Verbindung aus. Sie sind über den Bereich der Rohrschellen hinaus auch in vielen anderen Anwendungsfällen vorteilhaft einsetzbar.

## Patentansprüche

1. Verbindungsanordnung, bestehend aus einem Verbindungselement (1) und einem ersten Befestigungsteil (9), wobei das Verbindungselement (1) einen Grundkörper (2) hat, der mit zumindest zwei überstehenden Federstegen (5) verbunden ist, welche an ihren elastisch zueinander bewegbaren Endbereichen Rasthaken (6) zum Hintergreifen der Befestigungsöffnung (7) eines ersten Befestigungsteils (9) in einer ausgefederten Verriegelungsstellung aufweisen und in den (2) ein Anschlußteil (4) einsetzbar ist, das zum Sichern und/oder Aufspreizen der Federstege (5) in der ausgefederten Verriegelungsstellung in deren Bereich einschraubbar, eindrückbar oder einschiebbar ist und wobei zwischen dem Anschlußteil (4) und dem Verbindungselement (1) ein zweites Befestigungsteil haltbar ist, **dadurch gekennzeichnet**, daß die an dem ersten Befestigungsteil (9) oder dergleichen vorgesehene Befestigungsöffnung (7) durch einen Einstecktrichter (14) begrenzt ist, der sich in Einsteckrichtung des Verbindungselementes (1) zur Befestigungsöffnung (7) hin konisch verjüngt, daß der Einstecktrichter (14) in Gebrauchsstellung des Verbindungselementes (1) im wesentlichen dessen zwischen dem Grundkörper (2) und den Rasthaken (6) angeordneten Teilbereich (15) aufnimmt und daß in der ausgefederten Verriegelungsstellung zwischen der Längsachse (L) des Anschlußteiles (4) und der Raststirnseite (28) der Rasthaken (6) ein Winkel kleiner 90° eingeschlossen ist.

2. Verbindungsanordnung nach Anspruch 1, dadurch gekennzeichnet, daß der Grundkörper (2) eine Einsteck-, Einschraub- oder dergleichen Eingriffsöffnung (27) aufweist, in die das als Schraub- oder Einsteckteil ausgebildete Anschlußteil (4) einsetzbar ist.

3. Verbindungsanordnung nach einem der Ansprüche 1 bis 2, dadurch gekennzeichnet, daß das Anschlußteil als Steckstift ausgebildet ist, welcher in der Eingriffsöffnung (27) kraftschlüssig und/oder reibschlüssig gehalten ist.

4. Verbindungsanordnung nach einem der Ansprüche 1 bis 3, dadurch gekennzeichnet, daß das Anschlußteil eine Quer- oder Außenprofilierung aufweist, die vorzugsweise mit einer am Grundkörper (2) im Bereich der Eingriffsöffnung (27) vorgesehenen Querprofilierung zusammenwirkt.

5. Verbindungsanordnung nach einem der Ansprüche 1 bis 4, dadurch gekennzeichnet, daß das Anschlußteil als ein Schraubteil (4) mit Außengewinde ausgebildet ist, welches in ein Innengewinde (3) der Eingriffsöffnung (27) einschraubbar ist.

6. Verbindungsanordnung nach einem der Ansprüche 1 bis 5, dadurch gekennzeichnet, daß das Verbindungselement (1) mehrere, vorzugsweise vier, sich paarweise gegenüberliegende Federstege (5) hat.

7. Verbindungsanordnung nach einem der Ansprüche 1 bis 6, dadurch gekennzeichnet, daß die Federstege (5) in ihrem zwischen dem Grundkörper (2) und dem(den) Rasthaken (6) angeordneten Bereich jeweils schräg nach innen zur Einschraub- oder Einsteck-Längsachse (L) des Anschlußteiles (4) geneigt sind.

8. Verbindungsanordnung nach einem der Ansprüche 1 bis 7, dadurch gekennzeichnet, daß die freien Endbereiche der Federstege (5) als Rasthaken (6) ausgebildet und dazu nach außen abgewinkelt sind.

9. Verbindungsanordnung nach einem der Ansprüche 1 bis 8, dadurch gekennzeichnet, daß im Bereich der Befestigungsöffnung (7) eine vorzugsweise mit den freien Endbereichen und/oder den Rasthaken der Federstege (5) zusammenwirkende Drehsicherung für das Verbindungselement (1) vorgesehen ist.

10. Verbindungsanordnung nach einem der Ansprüche 1 bis 9, dadurch gekennzeichnet, daß die Befestigungsöffnung (7) zur Drehsicherung des Verbindungselementes (1) einen mehreckigen, gezackten oder dergleichen unrunden lichten Querschnitt hat.

11. Verbindungsanordnung nach einem der Ansprüche 1 bis 10, dadurch gekennzeichnet, daß die Befestigungsöffnung (7) auf ihrer dem Grundkörper (2) abgewandten Flachseite durch einen Ringbund (29) begrenzt ist, der an seiner axial vorstehenden Stirnseite zumindest eine Rastausnehmung (30) oder -anformung hat und daß diese Rastausnehmung (30) oder -anformungin verriegelungsstellung des Verbindungselementes (1) mit den Rasthaken (6) zusammenwirkt.

12. Verbindungsanordnung nach einem der Ansprüche 1 bis 11, dadurch gekennzeichnet, daß die freien Endbereiche der Federstege (5) vorzugsweise an ihren beiden Schmalseiten eine etwa radial nach außen überstehende Anformung (11) aufweisen, die zumindest in einem zum freien Ende der Federstege (5) weisenden oberen Teilbereich als Rasthaken (6) ausgebildet sind.

13. Verbindungsanordnung nach einem der Ansprüche 1 bis 12, dadurch gekennzeichnet, daß zumindest eine radial nach außen überstehende Anformung einen unteren, gegenüber dem oberen, als Rasthaken (6) ausgebildeten Teilbereich zurückversetzten Teilbereich (12) hat.

14. Verbindungsanordnung nach einem der Ansprüche 1 bis 13, dadurch gekennzeichnet, daß die Anformungen (11) der Federstege (5) an ihrem, dem Grundkörper (2) abgewandten Randbereich eine Einsteckschräge (13) aufweisen und daß sich dazu die Anformungen (11) zum freien Ende der Federstege (5) hin verjüngen.

15. Verbindungsanordnung nach einem der Ansprüche 1 bis 14, dadurch gekennzeichnet, daß die der Befestigungsöffnung (7) abgewandte Flachseite des Grundkörpers (2) vorzugsweise etwa in einer Ebene mit den an den Einstecktrichter (14) angrenzenden Bereich (16) des Befestigungsteiles (9) angeordnet ist.

16. Verbindungsanordnung nach einem der Ansprüche 1 bis 15, dadurch gekennzeichnet, daß der vorzugsweise plättchenförmige Grundkörper (2) insbesondere auf seiner den Federstegen (5) zugewandten Flachseite einen Bund (17) aufweist, der das Innengewinde (3) oder dergleichen Querprofilierung des Grundkörpers (2) trägt.

17. Verbindungsanordnung nach einem der Ansprüche 1 bis 16, dadurch gekennzeichnet, daß zur Sicherung des Anschlußteiles (4) in der Einstecköffnung (27) eine Drehsicherung vorgesehen ist und daß dazu der Bund (17) vorzugsweise in radialer Richtung geringfügig gestaucht ist.

18. Verbindungsanordnung nach einem der Ansprüche 1 bis 17, dadurch gekennzeichnet, daß zur Sicherung des Anschlußteiles (4) eine Drehsicherungs-Lasche (31) vorgesehen ist, die über den Grundkörper (2) vorzugsweise in Richtung zu den Federstegen (5) vorsteht und mit ihrem freien Endbereich am Anschlußteil (4) anliegt.

19. Verbindungsanordnung nach einem der Ansprüche 1 bis 18, dadurch gekennzeichnet, daß die Federstege (5) in ihrer gesicherten, ausgefederten Verriegelungsstellung mit ihren freien Endbereichen zumindest bereichsweise am Anschlußteil (4) anliegen und daß an dem am Anschlußteil (4) anliegenden Teilbereich (19) der Federstege (5) ein innerer Gewindeabschnitt (20) oder dergleichen mit dem Außengewinde oder der Außenprofilierung des Anschlußteiles (4) zusammenwirkende Querprofilierung vorgesehen ist.

20. Verbindungsanordnung nach einem der Ansprüche 1 bis 19, dadurch gekennzeichnet, daß der Grundkörper (2), die Federstege (5) und gegebenenfalls auch der Bund (17) des Verbindungselementes (1) einstückig miteinander verbunden sind und daß das Verbindungselement (1) aus Federstahl, Kunststoff oder dergleichen elastischem Material besteht.

## Claims

1. A connecting arrangement, comprising a connecting element (1) and a first fastening piece (9), wherein the connecting element (1) has a base (2) connected to at least two projecting spring pins (5) whose end areas movable elastically towards one another present arresting hooks (6) which, in a deflected, locking position, serve to engage behind the fastening opening (7) of a first fastening piece (9), wherein a connecting piece (4) is insertable in said base (2) and is adapted to be screwed, pressed or pushed into the region of the spring pins (5) to secure and/or expand the latter in the deflected, locking position, and wherein a second fastening piece can be held between the connecting piece (4) and the connecting element (1), **characterized in that** the fastening opening (7) provided on the first fastening piece (9) or the like is defined by an insert funnel (14) tapering towards the fastening opening (7) as considered in the direction of insertion of the connecting element (1), that in the use position of the connecting element (1) the insert funnel (14) substantially receives the portion (15) thereof arranged between the base (2) and the arresting hooks (6), and that in the deflected, locking position an angle smaller than 90° is included between the longitudinal axis (L) of the connecting piece (4) and the arresting face (28) of the arresting hooks (6).

2. A connecting arrangement as claimed in claim 1, characterized in that the base (2) has an opening (27) for insertion, threaded engagement or similar engagement adapted to receive the connecting piece (4) in the form of a screw-in or push-in element.

3. A connecting arrangement as claimed in any one of claims 1 to 2, characterized in that the connecting piece takes the form of a pin plug force-lockingly and/or frictionally held in the opening (27) for engagement.

4. A connecting arrangement as claimed in any one of claims 1 to 3, characterized in that the connecting piece has a transverse or external contour preferably co-operating with a transverse contour provided on the base (2) in the region of the opening (27) for engagement.

5. A connecting arrangement as claimed in any one of claims 1 to 4, characterized in that the connecting piece takes the form of an externally threaded screw-in element (4) adapted to be screwed into an internal thread (3) of the opening (27) for engagement.

6. A connecting arrangement as claimed in any one of claims 1 to 5, characterized in that the connecting element (1) has a plurality of spring pins (5), preferably four, mutually opposed in pairs.

7. A connecting arrangement as claimed in any one of claims 1 to 6, characterized in that the region of the spring pins (5) that is arranged between the base (2) and the arresting hook(s) (6) is angularly inclined inwardly to the screw-in or push-in longitudinal axis (L) of the connecting piece (4).

8. A connecting arrangement as claimed in any one of claims 1 to 7, characterized in that the free end areas of the spring pins (5) take the form of arresting hooks (6) and for this purpose are angled outwardly.

9. A connecting arrangement as claimed in any one of claims 1 to 8, characterized in that in the region of the fastening opening (7) there is an anti-rotation device that is provided for the connecting element (1) and preferably co-operates with the free end areas and/or the arresting hooks of the spring pins (5).

10. A connecting arrangement as claimed in any one of claims 1 to 9, characterized in that the fastening opening (7) has a polygonal, serrated or similar noncircular inside cross section to prevent rotation of the connecting element (1).

11. A connecting arrangement as claimed in any one of claims 1 to 10, characterized in that the face of the fastening opening (7) facing away from the base (2) is defined by a collar (29) having on the axially projecting rim thereof at least one arresting recess (30) or arresting formation, and that in the locking position of the connecting element (1) said arresting recess (30) or arresting formation co-operates with the arresting hooks (6).

12. A connecting arrangement as claimed in any one of claims 1 to 11, characterized in that the free end areas of the spring pins (5) are formed, preferably at their two narrow edges, with a substantially radially outward projection (11), said projections taking the form of arresting hooks (6) at least in an upper portion pointing to the free end of the spring pins (5).

13. A connecting arrangement as claimed in any one of claims 1 to 12, characterized in that at least one radially outward projection has a lower portion (12) set back relative to the upper portion in the form of an arresting hook (6).

14. A connecting arrangement as claimed in any one of claims 1 to 13, characterized in that the projections (11) of the spring pins (5) have on their edge area facing away from the base (2) a slant (13) for insertion and that for this purpose the projections (11) taper towards the free end of the spring pins (5).

15. A connecting arrangement as claimed in any one of claims 1 to 14, characterized in that the face of the base (2) facing away from the fastening opening (7) is arranged so as to be preferably substantially co-planar with that area (16) of the fastening piece (9) which adjoins the insert funnel (14).

16. A connecting arrangement as claimed in any one of claims 1 to 15, characterized in that the preferably platelike base (2) has particularly on its face facing the spring pins (5) a collar (17) bearing the internal thread (3) or similar transverse contour of the base (2).

17. A connecting arrangement as claimed in any one of claims 1 to 16, characterized in that an anti-rotation device is provided for securing the connecting piece (4) in the opening (27) for insertion and that for this purpose the collar (17) is preferably slightly buckled in the radial direction.

18. A connecting arrangement as claimed in any one of claims 1 to 17, characterized in that for securing the connecting piece (4) there is an anti-rotation element (31) provided projecting beyond the base (2) preferably in the direction of the spring pins (5), the free end area of said anti-rotation element bearing against the connecting piece (4).

19. A connecting arrangement as claimed in any one of claims 1 to 18, characterized in that in their secured, deflected, locking position, the spring pins (5) have at least portions of their free end areas bearing against the connecting piece (4) and that the portion (19) of the spring pins (5) bearing against the connecting piece (4) is provided with an inside threaded portion (20) or similar transverse contour co-operating with the external thread or external contour of the connecting piece (4).

20. A connecting arrangement as claimed in any one of claims 1 to 19, characterized in that the base (2), the spring pins (5) and optionally also the collar (17) of the connecting element (1) are integrally interconnected and that the connecting element (1) is made of spring steel, plastic or similar elastic material.

## Revendications

1. Dispositif de connexion, constitué d'un élément de connexion (1) et d'une première partie de fixation (9), l'élément de connexion (1) comportant un corps de base (2) relié à au moins deux nervures élastiques (5) en saillies qui présentent, sur leur zone d'extrémité déplaçable élastiquement l'une par rapport à l'autre, des crochets d'encliquetage (6), en vue de saisir par l'arrière l'ouverture de fixation (7) d'une première partie de fixation (9), dans une positon de verrouillage déployée élastiquement, et corps de base (2) dans lequel peut être insérée une partie de raccordement (4) susceptible d'être introduite dans sa zone avec vissage, pressage ou coulissement pour assurer et/ou écarter les nervures élastiques (5) dans la position de verrouillage déployée élastiquement, et une deuxième partie de fixation pouvant être maintenue entre la partie de raccordement (4) et l'élément de connexion (1), caractérisée en ce que l'ouverture de fixation (7), prévue sur la première partie de fixation (9) ou analogue, est délimitée par un entonnoir d'enfichage (14) qui va en s'effilant dans la direction d'enfichage de l'élément de connexion (1) en direction de l'ouverture de fixation (7), avec une forme conique, en ce que, dans la positon d'utilisation de l'élément de connexion (1), l'entonnoir d'enfichage (14) reçoit sensiblement sa zone partielle (15) disposée entre le corps de base (2) et les crochets d'encliquetage (6), et en ce qu'un angle inférieure à 90° est fait dans la position de verrouillage déployée élastiquement, entre l'axe longitudinal (L) de la partie de raccordement (4) et la face frontale d'encliquetage (28) du crochet d'encliquetage (6).

2. Dispositif de connexion selon la revendication 1, caractérisé en ce que le corps de base (2) présente une ouverture d'enfichage, de vissage ou d'engagement analogue (27) dans laquelle la partie de raccordement (4) réalisée sous forme de pièce à visser ou à enficher peut être insérée.

3. Dispositif de connexion selon l'une des revendications 1 ou 2, caractérisé en ce que la partie de raccordement est sous forme de goupille à enficher, maintenue dans l'ouverture d'engagement (27) avec liaison mécanique et/ou liaison par friction.

4. Dispositif de connexion selon l'une des revendications 1 à 3, caractérisé en ce que la partie de raccordement présente un profilage transversal ou extérieur qui coopère de préférence avec un profilage transversal prévu sur le corps de base (2) dans la zone d'ouverture d'engagement (27).

5. Dispositif de connexion selon l'une des revendications 1 à 4, caractérisé en ce que la partie de raccordement est réalisée sous forme de partie filetée (4) dotée d'un filetage extérieur, qui peut être vissée dans un taraudage (3) de l'ouverture d'engagement (27).

6. Dispositif de connexion selon l'une des revendications 1 à 5, caractérisé en ce que l'élément de connexion (1) comporte une pluralité, de préférence quatre, nervures élastiques (5) opposées par paires.

7. Dispositif de connexion selon l'une des revendications 1 à 6, caractérisé en ce que, dans leurs zones disposées entre le corps de base (2) et le ou les crochets d'encliquetage (4), les nervures élastiques (5) sont respectivement inclinés obliquement vers l'intérieur en direction de l'axe longitudinal (L) de vissage ou d'enfichage de la pièce ou partie de raccordement (4).

8. Dispositif de connexion selon l'une des revendications 1 à 7, caractérisé en ce que les zones d'extrémité libres des nervures élastiques (5) sont réalisées sous forme de crochets d'encliquetage (6) et sont coudées vers l'extérieur à cette fin.

9. Dispositif de connexion selon l'une des revendications 1 à 8, caractérisé en ce que dans la zone de l'ouverture de fixation (7) est prévue, pour l'élément de connexion (1), une sécurité de rotation qui coopère, de préférence, avec les zones d'extrémités libres et/ou les cliquets d'encliquetage des nervures élastiques (5).

10. Dispositif de connexion selon l'une des revendications 1 à 9, caractérisé en ce que l'ouverture de fixation (7) présente une section transversale polygonale en dentelé ou analogue, non ronde, pour assurer la sécurité de rotation de l'élément de connexion (1).

11. Dispositif de connexion selon l'une des revendications 1 à 10, caractérisé en ce que l'ouverture de fixation (7) est délimitée, sur sa face plate opposée au corps de base (2), par une collerette annulaire (29) qui, sur sa face frontale située axialement en saillie, comporte au moins un évidemment ou un relief d'encliquetage (30), et en ce que cet évidement d'encliquetage (30) ou ce relief d'encliquetage coopère avec le crochet d'encliquetage (6), dans la position de verrouillage de l'élément de connexion (1).

12. Dispositif de connexion selon l'une des revendications 1 à 11, caractérisé en ce que les zones d'extrémité libre des nervures élastiques (5) présentent de préférence sur leurs deux côtés étroits un relief (11) faisant saillie vers l'extérieur à peu près radialement et sont réalisées sous forme d'ergots d'encliquetage (6), au moins dans une zone partielle supérieure tournée vers l'extrémité libre des nervures élastiques (5).

13. Dispositif de connexion selon l'une des revendications 1 à 12, caractérisé en ce qu'au moins un relief, en saillie radialement vers l'extérieur, comporte une zone inférieure (12), décalée en retrait par rapport à la zone supérieure réalisée sous forme de crochets d'encliquetage (6).

14. Dispositif de connexion selon l'une des revendications 1 à 11, caractérisé en ce que les reliefs (11) des nervures élastiques (5) présentent, sur leur zone de bordure opposée au corps de base (2), une rampe d'enfichage (13), et en ce que, à cette fin, les reliefs (11) vont en s'effilant en direction de l'extrémité libre des nervures élastiques (5).

15. Dispositif de connexion selon l'une des revendications 1 à 14, caractérisé en ce que la face plate, opposée à l'ouverture de fixation (7), du corps de base (2) est disposée de préférence à peu près dans le plan de la zone (16), limitrophe à l'entonnoir d'enfichage (14), de la partie de fixation (9).

16. Dispositif de connexion selon l'une des revendications 1 à 15, caractérisé en ce que le corps de base (2), de préférence réalisé sous forme de plaquette, présente, en particulier sur sa face plate tournée vers les nervures élastiques (5), une collerette (17) qui portent le taraudage (3), ou le profilage transversal analogue, du corps de base (2).

17. Dispositif de connexion selon l'une des revendications 1 à 16, caractérisé en ce que, pour assurer la sécurité de la partie de raccordement (4) dans l'ouverture d'enfichage (27) est prévue une sécurité de rotation, et en ce que, à cette fin, la collerette (17) est de préférence légèrement écrasée en direction radiale.

18. Dispositif de connexion selon l'une des revendications 1 à 17, caractérisé en ce que, pour assurer le verrouillage de la partie de raccordement (4), est prévue une patte de blocage en rotation (31), qui fait saillie au-dessus du corps de base (2) de préférence dans la direction des nervures élastiques (5) et appuie, par sa zone d'extrémité libre, sur la partie de raccordement (4).

19. Dispositif de connexion selon l'une des revendications 1 à 18, caractérisé en ce que les nervures élastiques (5) appuient dans leur position de verrouillage assuré, déployée élastiquement, par leurs zones d'extrémité libres, au moins par zones, sur la partie de raccordement (4) et en ce que, sur la zone partielle( 19) appuyant sur la partie de raccordement (4), des nervures élastiques (5) et prévue une section à taraudage (20), ou ou ayant un profilage transversal analogue, coopérant avec le filetage extérieur ou le profilage extérieur de la partie de raccordement (4).

20. Dispositif de connexion selon l'une des revendications 1 à 19, caractérisé en ce que le corps de base (2), les nervures élastiques (5) et, le cas échéant également, la collerette (17) de l'élément de liaison (1) sont reliés ensemble d'un seul tenant et en ce que l'élément de liaison (1) et réalisé en acier à ressort, en matière plastique, ou en un autre matériau élastique analogue.
